# EUROPEAN PATENT APPLICATION

(11) **EP 2 439 478 A2**
(43) Date of publication of application: **11.04.2012**
(21) Application number: 11466001.2
(22) Date of filing: 11.02.2011
(51) Int. Cl.: F28F 9/02, F28F 9/26, F28F 21/08, B23K 1/00, B23K 1/19

(54) **Connection of copper and aluminium pipes in a cooling circuit**

(30) Priority: 08.10.2010 CZ 201023311 U
(71) Applicant: Lloyd Coils Europe, s.r.o., 153 00 Praha 5, Radotin (CZ)
(72) Inventor: Broz, Jiri, Ph.D., 150 00 Praha 5 (CZ)
(74) Representative: Halaxova, Zdenka

(57) **Abstract**

The connection of a pipe made of copper or its alloy with a pipe made of aluminium alloy in a heat exchanger cooling circuit, in particular, a joint of a copper connecting pipe with an aluminium alloy collecting pipe. The connection is made of a steel transition piece (2) connected to a copper connecting pipe (3) by a soldered joint (4) at one end and to an aluminium alloy collecting pipe (1) by a soldered joint (4) at the other. The length of the transition piece (2) is at the most 10 times the diameter of the larger of the connected pipes (1, 3). There is a steel transition piece (2) making an inner piece of the soldered joint (4) at the collecting pipe (1), or there is a steel transition piece (2) making an inner piece of the soldered joint (4) at the connecting pipe (1), or there is a steel transition piece (2) making an outer piece of the soldered joint (4) at the connecting pipe (1).

## Description

### Field of the Invention

The invention relates to the connection of a pipe made of copper and a pipe made of aluminium alloy in a cooling circuit with a closed coolant circuit, particularly to the connection of a cooper connecting pipe and an aluminium alloy collecting pipe.

### State of the Art

Copper pipes are usually connected in the cooling circuits. However, aluminium alloy pipes are increasingly used today, so that there are pipes made of both materials in one circuit. It is often necessary to connect an aluminium alloy pipe to a copper pipe. Mechanical or screwed joints are used for such connections, but they pose risk due to potential leakage.

Under specific conditions, pipes made of these materials can be connected by soldering. Soldering connections of there two materials often do not have sufficient strength, toughness, resistance to cyclic loading and tightness. This is due to different physical properties of the joined materials. The connection of aluminium alloy pipes with copper pipes ranks among difficult joints. Such a connection is also susceptible to subsequent heating, which may occur, for instance, when soldering another close joint.

The aim of this invention is to make a joint whose execution would be technically easy and that would eliminate or mitigate the disadvantages of the known joints of aluminium alloy pipes and copper pipes in a cooling circuit.

### Nature of the Invention

This task is fulfilled by the connection of a pipe made of copper or its alloy with a pipe made of aluminium alloy in a heat exchanger cooling circuit, in particular, a joint of a copper connecting pipe with an aluminium alloy collecting pipe made according to the invention. It is characterised in that it is made of a steel transition piece connected to a copper connecting pipe by a soldering joint at one end and to an aluminium alloy collecting pipe by a soldered joint at the other. The transition piece length is at the most 10 times the diameter of the larger of the connected pipes, the steel transition piece making an inner piece of the soldered joint at the collecting pipe. As the soldered joint at the connecting pipe is concerned, the steel transition piece can make an inner piece /or an outer piece/ or have the same section as the connecting pipe. The soldered joint with a copper connecting pipe may be made of brass / or solder with the addition of silver.

The advantage and improved performance of the connection according to the invention design lie in its technological simplicity while achieving the required properties. This connection has sufficient strength, toughness, resistance to cyclic loading and permanent tightness. The joint according to the technical design is also less vulnerable when soldering another close joint, because it is not susceptible to subsequent heating, as is the case of previously used connections. The connection is mechanically resistant and tight when exposed to operating temperature, internal high-pressure and cyclic changes in operating pressure.

### List of Figures in Drawings

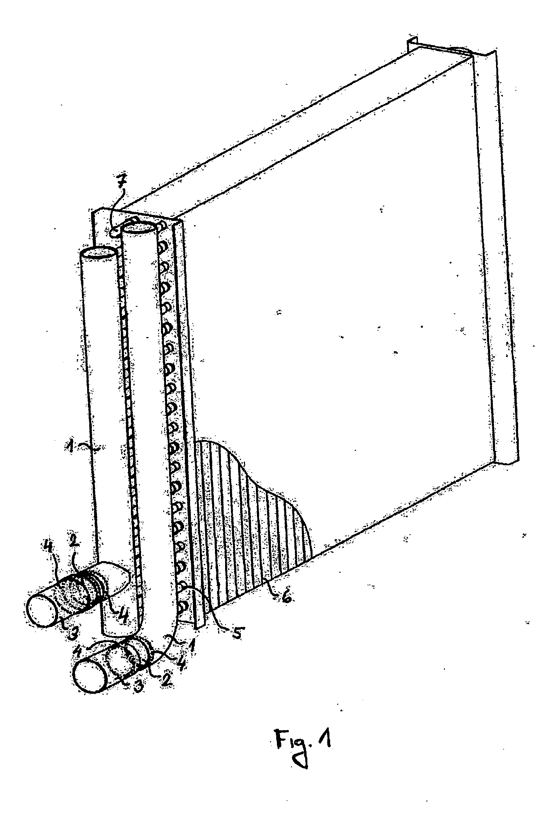

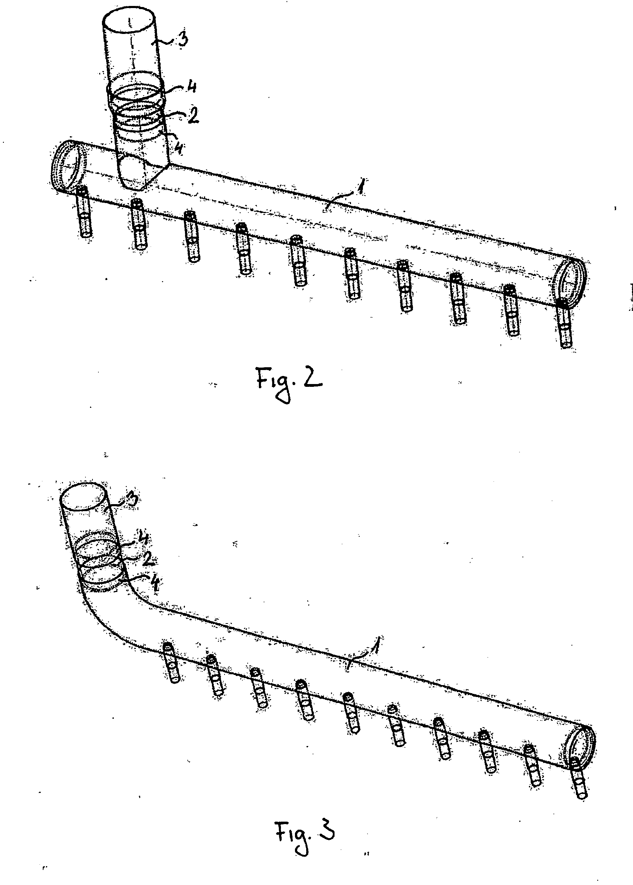

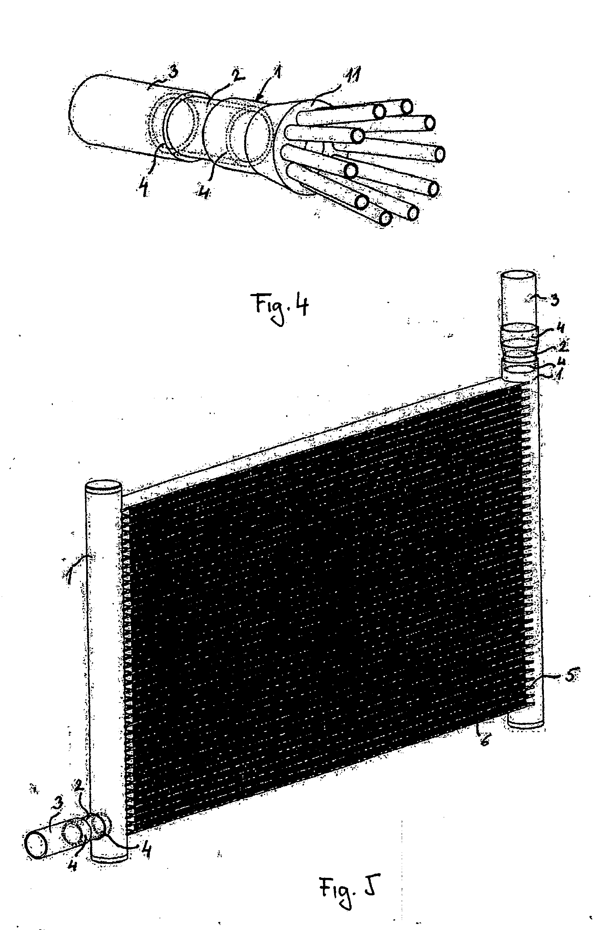

The invention is further illustrated by examples, where Figure 1 represents an overall view of a heat exchanger with one collecting pipe of "T" shape and one curved collecting pipe, Figure 2 shows the detail of the collecting pipe of "T" shape with the joint to the connecting pipe and Figure 3 displays the detail of the curved collecting pipe with the joint to the connecting pipe. Figure 4 is a detail of the joint of the connecting pipe with the collecting pipe, which is designed as a coolant distributor. Figure 5 shows a diagram of the heat exchanger with a set of heat exchanger flat tubes, where the collecting pipes are connected to the connecting pipes.

### Examples of the Invention

### Example 1

The first example of the connection according to the present invention is the joint of the copper connecting pipe 3 and the collecting pipe 1 of the lamellar heat exchanger. The lamellar heat exchanger comprises exchanger tubes 5 and a lamellar block, with the lamellas 6 being attached mechanically to the exchanger tubes 5. All the exchanger tubes 5 are interconnected by firmly mounted elbows 7 and in this way form parallel circuits. All the parallel circuits of the heat exchanger are interconnected at both ends by means of the collecting pipes 1 made of aluminium alloy. The collecting pipes 1 may be straight, angular or curved. The attached drawings show straight and curved collecting pipes 1. The lamellar heat exchanger is connected to the cooling circuit by the connecting pipes 3 which are made of copper. The joint is made of a steel transition piece 2 connected to a copper connecting pipe 3 by a soldered joint 4 at one end and to an aluminium alloy collecting pipe 1 by a soldered joint 4 at the other. The length of the transition piece 2 is at the most 10 times the diameter of the larger of the connected pipes 1, 3. The steel transition piece 2 makes an inner piece of the soldered joint 4 at the collecting pipe 1. In the described example the steel transition piece 2 makes an inner piece for the curved collecting pipe 1 as well as in the soldered joint 4 at the connecting pipe 3.

As the soldered joint 4 at the connecting pipe 3 is concerned, in an alternative design the steel transition piece 2 can make an outer piece or have the same section as the connecting pipe 3 for the collecting pipe 1 of "T" shape.

The soldered joint 4 with a copper connecting pipe 3 may be made of brass solder or solder with the addition of silver.

When in operation, the heat exchanger is exposed to internal pressure, with the coolant flowing through it into the inlet connecting pipe 3 and then to the respective collecting pipe 1, the flow of the coolant being divided into individual parallel circuits. It flows through the exchanger tubes 5 of the block and elbows 7, then the individual parallel streams meet in the outlet collecting pipe 1 and the coolant is further delivered through the outlet connecting pipe 3 into the cooling circuit.

The heat exchanger is installed in the cooling circuit by soldering the connecting pipes 3 to the other components of the cooling circuit. Low thermal conductivity of the transition piece 2 protects the soldered joint 4 against damage, while also protecting any internal joints of the connecting pipe 1 and the heat exchanger tubes 5.

### Example 2

The second example of the connection according to the present invention is the joint of the copper connecting pipe 3 and the collecting pipe 1, where the inlet collecting pipe 1 is designed as a coolant distributor. It is an evaporator, which is a specific type of lamellar heat exchanger. It is usually characterized by the presence of an axially symmetric coolant distributor 11, which replaces or supplements the usual form of the collecting pipe 1. The copper connecting pipe 3 is connected to the coolant distributor 11 through a steel transition piece 2 in the same way as it has been described in the first embodiment. The evaporator is connected to the cooling circle by connecting pipes 3.

During operation, the evaporator is exposed to internal high pressure. The coolant flows through it so that it enters the connecting pipe 3 and is further distributed to individual parallel circuits in the distributor 11. The individual inner joints of the exchanger tubes 5 as well as the soldered joints 4 at both ends of the transition piece 2 provide mechanical strength and tightness when exposed to operating temperature, internal high pressure and cyclic changes in working pressure.

The evaporator is installed in the cooling circuit by soldering the connecting pipes 3 to the other components of the cooling circuit. Low thermal conductivity of the transition piece 2 protects the soldered joint 4 against damage, while also protecting any inner joints of the distributor 5 and heat exchanger tubes 5.

### Example 3

The third example of the connection according to the present invention is the joint of the copper connecting pipe 3 and the collecting pipe 1 of the soldered aluminium heat exchanger with flat exchanger tubes 5. The heat exchanger is made out of lamellas 6 and a set of flat exchanger tubes 5 made of an aluminium alloy, which have one or more inner channels. The two collecting pipes 1 are also made of aluminium alloy. These components are mutually connected by soldering. The collecting pipes 1 of the heat exchanger may be divided by partitions. Connecting pipes 3 connecting the heat exchanger to the cooling circuit are connected to the collecting pipes 1 using the transition pieces 2 and soldered joints 4 described in the first embodiment.

When in operation, the heat exchanger is exposed to internal pressure, with the coolant flowing through it into the inlet connecting pipe 3 and then to the inlet collecting pipe 1, the flow of the coolant being divided into individual flat exchanger tubes 5. The coolant meets again in the outlet collecting pipe 1 and it is delivered to the cooling circuit through the outlet connecting pipe 3. If the collecting pipes 1 are divided by partitions, the coolant flows between individual collecting pipes 1 several times. In the case of an even number of such passages the inlet collecting tube 1 is also the outlet collecting tube 1

### Industrial Application

The connection of a pipe made of copper with a pipe made of aluminium alloy can be used in the industry in a heat exchanger cooling circuit, in particular, where copper connecting pipes are to be connected with an aluminium alloy collecting pipe.

## Claims

1. The connection of a pipe made of copper or its alloy with a pipe made of aluminium alloy in a heat exchanger cooling circuit, in particular a copper connecting pipe with an aluminium alloy collecting pipe, ***characterised in that**,* the connection is made of a steel transition piece (2) connected to a copper connecting pipe (3) by a soldered joint (4) at one end and to an aluminium alloy collecting pipe (1) by a soldered joint (4) at the other, where the length of the transition piece (2) is at the most ten times the diameter of the larger of the connected pipes (1, 3), the steel transition piece (2) making an inner piece in the soldered joint (4) at the collecting pipe (1).

2. The connection of a pipe made of copper or its alloy with a pipe made of aluminium alloy according to Claim 1, ***characterised in that*** there is a steel transition piece (2) making an inner piece of the soldered joint (4) at the connecting pipe (3).

3. The connection of a pipe made of copper or its alloy with a pipe made of aluminium alloy according to Claim 1, ***characterised in that*** there is a steel transition piece (2) making an outer piece of the soldered joint (4) at the connecting pipe (3).

4. The connection of the pipe made of copper or its alloy with the pipe made of aluminium alloy according to Claim 1, ***characterised in that*** there is a steel transition piece (2) of the same section as the connecting pipe (3) at the soldered joint (4) of the connecting pipe (3).

5. The connection of a pipe made of copper or its alloy with a pipe made of aluminium alloy according to Claim 1, ***characterised in that*** the soldered joint (4) at the copper connecting pipe (3) is made of brass solder.

6. The connection of a pipe made of copper or its alloy with a pipe made of aluminium alloy according to Claim 1, ***characterised in that*** the soldered joint (4) at the copper connecting pipe (3) is made of solder with the addition of silver.
